# EUROPEAN PATENT APPLICATION

(11) **EP 4 381 955 A1**
(43) Date of publication of application: **12.06.2024**
(21) Application number: 22874192.2
(22) Date of filing: 28.04.2022
(51) Int. Cl.: A23J 3/00, A23J 3/22, A23L 33/185

(54) **YEAST PROTEIN VEGETARIAN MEAT, AND PREPARATION METHOD THEREFOR AND APPLICATION THEREOF**

(30) Priority: 30.09.2021 CN 202111164259
(71) Applicant: Angel Yeast Co., Ltd., Hubei 443003 (CN)
(72) Inventor: QIN, Xianwu, Yichang, Hubei 443003 (CN); SHEN, Shuo, Yichang, Hubei 443003 (CN); LI, Ku, Yichang, Hubei 443003 (CN); LI, Pei, Yichang, Hubei 443003 (CN); XIANG, Fei, Yichang, Hubei 443003 (CN); YAN, Dongfang, Yichang, Hubei 443003 (CN); LIU, Xuejiao, Yichang, Hubei 443003 (CN)
(74) Representative: karo IP
(86) International application number: PCT/CN2022/089886
(87) International publication number: WO 2023/050794

(57) **Abstract**

A vegetarian meat product made from yeast proteins, and a preparation method therefor and an application thereof, relating to the technical field of natural product development and utilization. The vegetarian meat product from yeast proteins comprises the following components: a meat flavor yeast extract, extruded puffed yeast protein filaments, a TG enzyme, vegetable protein, vegetable oil, a thickener, and auxiliary materials. The prepared vegetarian meat product not only has a real meat flavor and a weak beany flavor, but also has a good fiber taste and can provide eaters with a relatively digestible protein source.

## Description

### Technical Field

The present disclosure relates to the technical field of natural product development and utilization, and in particular to a vegetarian meat (i.e., plant or yeast based products that resemble meat) made from yeast protein, and a preparation method therefor and an application thereof.

### Background

Meat products have always been favored by consumers, but due to the high price and cost of raw meat materials, their production is limited. Also, meat products contain high cholesterol, such that over-consumption may increase the risk of people suffering from obesity diseases such as atherosclerosis, hyperlipidemia, hypertension, and coronary heart disease. Compared with animal-based raw materials, plant-based raw materials are more readily available and have the advantages of high protein, low fat, and cholesterol-free, which can effectively prevent the occurrence of chronic diseases such as hypertension, coronary heart disease, and diabetes. Long-term consumption may effectively strengthen the physique and be beneficial to physical health. Thus, vegetarian meat products, especially soybean protein vegetarian meat, have been rapidly developed.

Soybean protein vegetarian meat is a preferred vegetable food to replace animal protein because vegetarian meat is less expensive than real meat and can meet the needs of people with high cholesterol who are not suitable for eating meat products. However, domestic vegetarian meat products are limited as compared to those in developed countries. With the improvement of people's living standards, the existing vegetarian meat products cannot meet people's needs with respect to color, aroma, flavor, and nutritional value of the vegetarian meat products.

Chinese Patent No. CN112006153A discloses a method for preparing a vegetarian meat using soybean protein concentrate and wheat protein, comprising: (1) pulverizing soybeans, defatting the obtained soybean powder with n-hexane at a ratio of 1:3 (w/v) for 3 times, and placing in a fume hood to remove n-hexane; mixing defatted soybean powder with n-hexane removed with water at a ratio of 1:10 (w/w) and adjusting the pH value to about 4.5, extracting the mixture by stirring in a thermostatic water bath at 50°C for 60 minutes and centrifuged at 4000 r/min for 10 minutes, adding 10 times volume of water at 55°C to a insoluble matter, stirring uniformly and separating, and repeating the process twice to improve the yield of the soybean protein; dissolving the curd and adjusting the pH value to 6.5, and drying in a vacuum environment to obtain a powdery soybean protein concentrate; (2) adding caustic soda solution to wheat bran to adjust the pH value to 8.5, fully stirring for 1 hour and centrifuging for separation, adjusting the pH value of the supernatant to 4 using hydrochloric acid, extracting the mixture by stirring in a thermostatic water bath at 90°C for 10 minutes, and centrifuging at 4000 r/min for 10 minutes to obtain an insoluble wheat protein; (3) weighing the soybean protein concentrate powder and the wheat protein at a ratio of 8:1-2:1, mixing uniformly, adding edible oil at a ratio of 10:1-0.6 to the total amount of the proteins, further mixing uniformly with ingredients such as salt, adding raw materials in a stirring extruder, heating and shearing the proteins at 150-170°C to obtain a soybean and wheat protein vegetarian meat; (4) frying the obtained vegetarian meat at 120-130°C.

Chinese Patent No. CN111329039A discloses a vegetarian Harbin red sausage and a preparation method therefor. The vegetarian Harbin red sausage is prepared from the following raw materials in a mass ratio: 65-75 kg of dry vegetarian meat chunks, 14-16 kg of non-transgenic soybean oil, 6-8 kg of pea powder, 6-8 kg of wheat protein isolate, 0.8-1.2 kg of salt, 1-2 kg of light soy sauce, 2.5-3.5 kg of xanthan gum, 3.5-4.5 kg of carrageenan, 13-15 kg of Konjac flour, and 23-27 kg of ice water. This disclosure determines the final raw material composition and preparation method of the red sausage by studying a large number of raw material ratios and processing technologies, which combines traditional red sausage components with gum and Konjac flour, resulting in rich nutrition and good taste, and uses vegetarian meat instead of meat raw materials to perfectly combine meat flavor and plant-based health, without causing hyperlipidemia. The red sausage has the characteristics of low fat, high dietary fiber, low energy, and strong satiety, which can inhibit hunger, reduce food intake, and help natural weight loss.

### Summary of the Invention

A technical problem to be solved by the present disclosure is that some problems exist in the existing vegetarian meat products, such as insufficient meat flavor, single protein type, and poor fiber taste.

To resolve the above problems, the present disclosure provides a vegetarian meat made from yeast protein and a preparation method therefor, and the specific technical solutions are as follows.

A vegetarian meat product made from yeast proteins, comprising a meat flavor yeast extract, extruded puffed yeast protein filaments, a TG enzyme, vegetable protein, vegetable oil, a thickener, and auxiliary materials, wherein a content of the meat flavor yeast extract is 1-6 parts by weight; the extruded puffed yeast protein filaments are 8-30 parts by weight; and the TG enzyme is 1-6 parts by weight.

Optionally, the content of the meat flavor yeast extract is 2-5 parts by weight; the extruded puffed yeast protein filaments are 10-20 parts by weight; and the TG enzyme is 2-5 parts by weight.

Optionally, the content of the meat flavor yeast extract is 3.5-5 parts by weight; the extruded puffed yeast protein filaments are 15-20 parts by weight; and the TG enzyme is 3.5-5 parts by weight.

Optionally, the content of the vegetable protein is 15-75 parts by weight.

Optionally, the content of the thickener is 2-40 parts by weight.

Optionally, the content of the auxiliary materials is 59.1-235 parts by weight.

Optionally, the vegetable protein is selected from one or more of vital wheat gluten, soybean protein isolate powder, and pea protein filaments, preferably 5-25 parts by weight of vital wheat gluten, 5-25 parts by weight of soybean protein isolate powder, and 5-25 parts by weight of pea protein filaments.

Optionally, the vegetable oil comprises rapeseed oil and coconut oil, preferably 5-25 parts by weight of rapeseed oil and 5-25 parts by weight of coconut oil.

Optionally, the thickener comprises methylcellulose and Konjac flour, preferably 1-20 parts by weight of methylcellulose and 1-20 parts by weight of Konjac flour.

Optionally, the auxiliary materials comprise water and flavoring.

Optionally, the flavoring comprises any one or more of salt, pepper, essence, monosodium glutamate, white granulated sugar, and beet juice, preferably 2-10 parts by weight of salt, 0.1-10 parts by weight of pepper, 1-10 parts by weight of essence, 2-10 parts by weight of monosodium glutamate, 2-10 parts by weight of white granulated sugar, and 2-25 parts by weight of beet juice.

A preparation method of the vegetarian meat product made from yeast proteins, comprising:
(1) activating a TG enzyme followed by cooling;
(2) preparing a thickener and mixing with (1) for use;
(3) mixing first vegetable oil with vegetable protein and emulsifying;
(4) mixing a meat flavor yeast extract with auxiliary materials;
(5) mixing the products obtained in steps (2)-(4) for use;
(6) mixing second vegetable oil with auxiliary materials;
(7) mixing protein filaments with the products obtained in steps (5) and (6), forming, packaging, and freezing for storage.

Optionally, in step (1), the activation time of the enzyme is 15-25 minutes.

Optionally, in step (1), the activation time of the enzyme is 20-25 minutes.

Optionally, in step (1), the cooling is ice-water cooling.

Optionally, in step (2), ice water is added to promote dissolution during the mixing.

Optionally, in step (3), the first vegetable oil is rapeseed oil, and the emulsification is ice-water emulsification.

Optionally, in step (1), the ice water added during the cooling is 10-30 parts by weight; in step (2), the ice water added during the mixing is 10-30 parts by weight; in step (3), the ice water used during the emulsification is 30-100 parts by weight.

Optionally, in step (6), the second vegetable oil is coconut oil melted by heating.

Optionally, in step (6), the second vegetable oil is coconut oil melted by heating.

A filling or sauce prepared by using the vegetarian meat product made from yeast proteins of the present disclosure or the vegetarian meat product made from yeast proteins obtained by the above preparation method.

A food product prepared by using the vegetarian meat product made from yeast proteins of the present disclosure or the vegetarian meat product made from yeast proteins obtained by the above preparation method and wheat and/or rice.

The present disclosure has the following beneficial effects.
(1) The addition of the meat flavor yeast extract imparts a true meat flavor to the vegetarian meat product made from yeast proteins and can also mask a beany flavor of soybean protein isolate and pea tissue protein.
(2) The extruded puffed yeast protein filaments used can provide the vegetarian meat product made from yeast proteins with a relatively digestible protein source and a good fiber taste.

### Brief Description of the Drawings

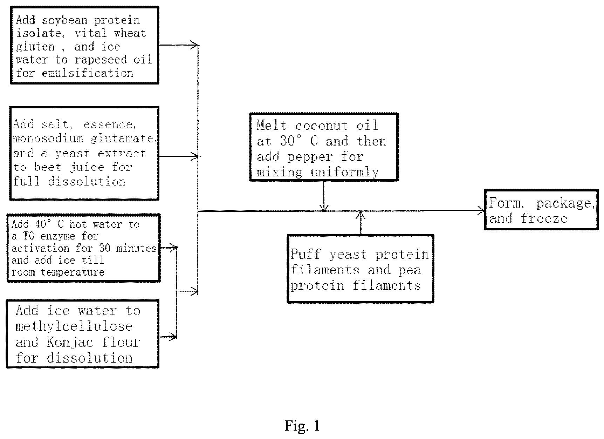

Figure 1 is a flowchart of a vegetarian meat product made from yeast proteins process.
Figure 2 is a radar chart of a sensory evaluation comparison.

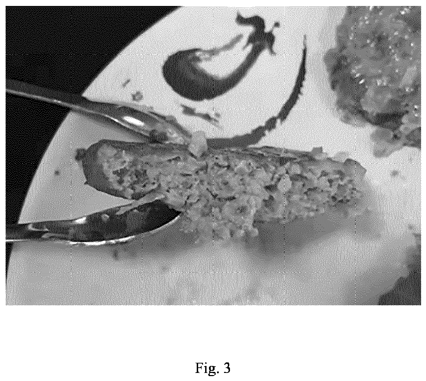

Figure 3 is a picture of a vegetarian meat product made from yeast proteins.

### Detailed Description of the Invention

As described above, the present disclosure provides a vegetarian meat product made from yeast proteins comprising a meat flavor yeast extract, extruded puffed yeast protein filaments, a TG enzyme, vegetable protein, vegetable oil, a thickener, and auxiliary materials, wherein a content of the meat flavor yeast extract is 1-6 parts by weight; the extruded puffed yeast protein filaments are 8-30 parts by weight; and the TG enzyme is 1-6 parts by weight.

**Table 1. Raw materials and devices used in embodiments**

| Raw materials / Devices | Model / Grade | Manufacturers / Vendors |
|---|---|---|
| Meat flavor yeast extract | ZTA01 | Angel Yeast Co., Ltd |
| Extruded puffed yeast protein filaments | Self-made (the water content of the finished product: 10-15%) | Made from yeast protein (sold by Angel Yeast Co., Ltd. - Model F80 - protein content greater than 50%) by extruding and puffing (double-screw extruding and puffing, pressure 2-5 MPa, extrusion temperature 150-200°C) |
| TG enzyme (100 U/g) | TG-100 | Angel Yeast Co., Ltd |
| Agitator | Model 3205 | Braun |
| Texture analyzer | TA.XTC-20 | Shanghai Baosheng Industrial Development Co. Ltd. |
| Flavoring (salt, sugar, monosodium glutamate, white pepper, etc.) | Conform to national standards | Commercially available |
| Soybean protein isolate | Protein content (greater than 90%) | Linyi Shansong Biological Products Co., Ltd. |
| Vital wheat gluten | Purity 99.9%. Protein content | Shandong Pingju Biotechnology Co., Ltd. |
| Pea protein filaments | (greater than 80%) | Yantai Shuangta Food Co.,Ltd. |
| Methylcellulose | 55HD400 | Shandong Head Group Co.,Ltd. |
| Konjac gum | YZ-36 | Hubei Yizhi Konjac Biotechnology Co., Ltd. |

The technical solution of the present disclosure will be described in detail through specific examples below, wherein the technical solution of the present disclosure does not involve non-food raw materials, and information on raw materials and devices used in Examples and Comparative Examples is shown in Table 1. In addition, all components in Examples are expressed in parts by weight, with each part corresponding to a mass of 1 gram

### Example 1

In step A, 45°C hot water was added to 1 part of a TG enzyme for activation for 25 minutes, and then 30 parts of ice water were added till room temperature to obtain an aqueous solution; in step B, 2 parts of methylcellulose and 2 parts of Konjac flour were mixed, and then 30 parts of ice water were added to the mixture for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 1 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 8 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 2

In step A, 45°C hot water was added to 2 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 2 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 3

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 4

In step A, 45°C hot water was added to 5 parts of a TG enzyme for activation for 25 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 5

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 25 parts of extruded puffed yeast protein filaments, 20 parts of pea protein filaments, and the melt obtained in step G were added to the stirred mixture obtained in step F and mixed uniformly; in step 1, the mixture obtained in step H was formed, packaged, and frozen for storage.

### Example 6

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 15 parts of extruded puffed yeast protein filaments, 20 parts of pea protein filaments, and the melt obtained in step G were added to the stirred mixture obtained in step F and mixed uniformly; in step 1, the mixture obtained in step H was formed, packaged, and frozen for storage.

### Example 7

In step A, 45°C hot water was added to 6 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 30 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 8

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 3.5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 9

In step A, 45°C hot water was added to 1.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 3.5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 10

In step A, 45°C hot water was added to 5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 11

In step A, 45°C hot water was added to 6 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 3.5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 12

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 1.5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 13

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 6 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Example 14

In step A, 45°C hot water was added to 3.5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 3.5 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 8 parts of extruded puffed yeast protein filaments, 20 parts of pea protein filaments, and the melt obtained in step G were added to the stirred mixture obtained in step F and mixed uniformly; in step 1, the mixture obtained in step H was formed, packaged, and frozen for storage.

### Comparative Example 1

In step A, 45°C hot water was added to 2 parts of a TG enzyme for activation for 15 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, The aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 0 part of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step 1, the mixture obtained in step H was formed, packaged, and frozen for storage.

### Comparative Example 2

In step A, 45°C hot water was added to 0 part of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 20 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Comparative Example 3

In step A, 45°C hot water was added to 5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 5 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 0 part of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

### Comparative Example 4

In step A, 45°C hot water was added to 5 parts of a TG enzyme for activation for 20 minutes, and then 30 parts of ice water were added till room temperature to obtain an aqueous solution; in step B, 2 parts of methylcellulose and 2 parts of Konjac flour were mixed, and then 30 parts of ice water were added for dissolution to obtain a dissolved matter; in step C, the aqueous solution obtained in step A and the dissolved matter obtained in step B were further mixed uniformly to obtain a mixture; in step D, 20 parts of soybean protein isolate powder, 20 parts of vital wheat gluten, and 100 parts of ice water were added to 20 parts of rapeseed oil for emulsification; in step E, 6 parts of salt, 1.5 parts of essence, 3 parts of monosodium glutamate, 6 parts of white granulated sugar, 0.3 part of white pepper, and 0 parts of a meat flavor yeast extract were added to 20 parts of beet juice for full dissolution; in step F, the mixtures obtained in steps C, D, and E were further mixed and stirred uniformly to obtain a stirred mixture; in step G, 20 parts of coconut oil were heated to 30°C for melting and then mixed uniformly to obtain a melt; in step H, 10 parts of extruded puffed yeast protein filaments, 20 parts of pea protein filaments, and the melt obtained in step G were added to the stirred mixture obtained in step F and mixed uniformly; in step I, the mixture obtained in step H was formed, packaged, and frozen for storage.

The prepared samples were subjected to sensory evaluation and texture detection, and the results were shown in Table 2. The specific testing procedure was as follows.
(1) Sensory evaluation was conducted by seven experienced sensory assessors to evaluate meat flavor, meat taste, beany flavor, delicious flavor, strong flavor, and overall taste of a vegetarian meat cake.
(2) Texture detection method: the vegetarian meat cake was made into a 10 mm-thick cylinder and tested using Shanghai Baosheng TA.XTC-20 texture analyzer. The TA/36R cylindrical probe was used for a press test, with a loadcell of 30 kg. Each sample was tested in triplicate.

**Table 2. Results of sensory evaluation and texture analysis of samples**

| Examples | Sensory evaluation (overall taste, beany flavor, meat flavor) | Texture analysis | | | |
|---|---|---|---|---|---|
| | | Hardness | Crispness | Elasticity | Chewiness |
| Example 1 | Little fiber taste, poor elasticity and chewiness, weak meat flavor, and strong beany flavor | 2547.3 | 2416.2 | 0.6371 | 1403.12 |
| Example 2 | Strong elasticity and chewiness, good fiber taste, weak beany flavor, and improved meat flavor | 4915.4 | 4815.8 | 0.8469 | 1776.23 |
| Example 3 | Good elasticity and chewiness, good fiber taste, strong meat flavor, and no beany flavor | 5238.7 | 5173.3 | 0.8702 | 1881.26 |
| Example 4 | Good fiber taste, strong elasticity and chewiness, good meat flavor, and slight beany flavor | 5972.4 | 5872.1 | 0.9643 | 1986.45 |
| Example 5 | Good fiber taste, strong chewiness, good meat flavor, and no beany flavor | 5954.1 | 5763.8 | 0.9423 | 1983.13 |
| Example 6 | Good fiber taste and chewiness, strong meat flavor, and no beany flavor | 5235.7 | 5163.3 | 0.8502 | 1781.26 |
| Example 7 | Good fiber taste, strong elasticity and chewiness, good meat flavor, and no beany flavor | 5982.4 | 5972.1 | 0.9683 | 1996.45 |
| Example 8 | Good fiber taste, good chewiness and elasticity, strong meat flavor, and no beany flavor | 5245.7 | 5263.3 | 0.8702 | 1881.26 |
| Example 9 | Poor elasticity, strong chewiness, good fiber taste, weak beany flavor, and good meat flavor | 3915.4 | 3815.8 | 0.7469 | 1576.23 |
| Example 10 | Strong fiber taste, strong chewiness and elasticity, strong meat flavor, and no beany flavor | 5975.4 | 5876.1 | 0.9683 | 1988.45 |
| Example 11 | Good fiber taste, strong elasticity and chewiness, good meat flavor, and slight beany flavor | 5983.4 | 5975.1 | 0.9693 | 1998.45 |
| Example 12 | Good fiber taste and chewiness, weak meat flavor, and strong beany flavor | 5235.7 | 5163.3 | 0.8502 | 1781.26 |
| Example 13 | Good fiber taste and chewiness, strong meat flavor, and no bean flavor | 5234.7 | 5166.3 | 0.8512 | 1784.26 |
| Example 14 | Poor fiber taste, good chewiness, strong meat flavor, and no beany flavor | 5473.2 | 5321.7 | 0.8701 | 1854.30 |
| Comparative Example 1 | Good elasticity and chewiness, good fiber taste, weak meat flavor, and strong beany flavor | 4919.5 | 4825.1 | 0.8502 | 1781.26 |
| Comparative Example 2 | Good fiber taste, poor chewiness, strong meat flavor, and no beany flavor | 2919.5 | 2725.5 | 0.6502 | 1481.26 |
| Comparative Example 3 | No fiber taste, strong chewiness and elasticity, strong meat flavor, and no beany flavor | 5942.4 | 5832.1 | 0.8342 | 1874.45 |
| Comparative Example 4 | Poor fiber taste, good chewiness and elasticity, weak meat flavor, and strong beany flavor | 5962.4 | 5852.1 | 0.9343 | 1975.45 |

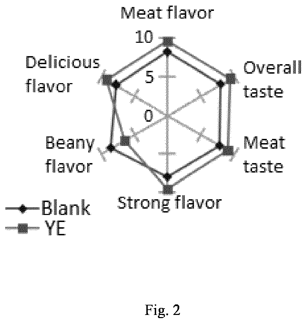

The Results analysis was as follows.
(1) As can be seen from the sensory evaluation of Examples 1-14 and Comparative Examples 1 and 4, after the addition of the meat flavor yeast extract, the products had a strong meat flavor, and a sensory evaluation comparison is shown in Figure 2.
(2) As can be seen from the sensory evaluation and texture data of Examples 1-14 and Comparative Examples 2 and 3, after the addition of the TG enzyme and the extruded puffed yeast protein filaments, the fibrous texture of the vegetarian meat was apparent, and its elasticity and chewiness were significantly improved.
(3) In addition, the following findings were obtained from the experimental results of Examples 1-14.

1) Compared with Examples 2, 3, 4, 6, 8, and 10, the additional amounts of the TG enzyme, the meat flavor yeast extract and the yeast protein filaments in Example 1 were all below the preferred range, and compared with the sensory results (little fiber taste, poor elasticity and chewiness, weak meat flavor, and strong beany flavor), the texture data were consistent with the sensory results.
2) Compared with Examples 2, 3, 4, 6, 8, and 10, the additional amounts of the TG enzyme and the yeast protein filaments in Example 7 were higher than the optimal range, and compared with the sensory results (good fiber taste, strong elasticity and chewiness, good meat flavor, and no beany flavor), the texture data were not significantly different from those in Example 4, indicating that the additional amounts of the TG enzyme and the yeast protein filaments beyond the maximum suitable range had little effect on the texture. Thus, it was suggested that the suitable addition amount range was optimal from an economic point of view.
3) Compared with Example 8, the additional amount of the TG enzyme in Example 9 was too small, and compared with the sensory results (poor elasticity, strong chewiness, good fiber taste, weak beany flavor, and good meat flavor), the texture data was worst and consistent with the sensory results, indicating that the TG enzyme has a more significant contribution to the texture.
4) Compared with Example 4, the additional amount of the TG enzyme in Example 11 was large, and compared with the sensory results (good fiber taste, strong elasticity and chewiness, good meat flavor, and slight beany flavor), the texture was not significantly different from that in Example 4, indicating that the additional amount of the TG enzyme had a limited contribution to the texture.
5) Compared with Example 8, the additional amount of the meat flavor yeast extract in Example 12 was less, and compared with the sensory results (good fiber taste and chewiness, weak meat flavor, and strong beany flavor), the texture was not significantly different from the texture data of the same other addition amounts, but the beany flavor was strong, indicating that the meat flavor yeast extract had a more significant contribution to the removal of the beany flavor and the improvement of the meat flavor.
6) Compared with Example 3, the additional amount of the meat flavor yeast extract in Example 13 was large, and compared with the sensory results (good fiber taste and chewiness, strong meat flavor, and no beany flavor), the texture data was not significantly different from the same corresponding others. The little increase in meat flavor further indicated that the meat flavor yeast extract had a vital role in the removal of the beany flavor and the improvement of the meat flavor.
7) Compared with Example 8, the additional amount of the yeast protein filaments in Example 14 was less, and compared with the sensory results (poor fiber taste, good chewiness, strong meat flavor, and no beany flavor), the texture had a significant difference, indicating that the yeast protein filaments have a more significant effect on the fiber taste and chewiness, with the less addition amount leading to poor chewiness and fiber taste of the vegetarian meat product.
8) Compared with Example 8, the additional amount of the yeast protein filaments in Example 5 was large, and compared with the sensory results (good fiber taste, strong chewiness, good meat flavor, and no beany flavor), the chewiness and elasticity of the overall texture did not increase significantly but affected the taste to some extent.

In view of the above, the vegetarian meat product made from yeast proteins prepared according to the present disclosure can achieve an overall performance of excellent meat flavor and taste within a specific range of preferred component content while ensuring economical requirements.

## Claims

1. A vegetarian meat product made from yeast proteins, comprising a meat flavor yeast extract, extruded puffed yeast protein filaments, a TG enzyme, vegetable protein, vegetable oil, a thickener, and auxiliary materials, wherein a content of the meat flavor yeast extract in the vegetarian meat product is 1-6 parts by weight; the extruded puffed yeast protein filaments are 8-30 parts by weight; and the TG enzyme is 1-6 parts by weight.

2. The vegetarian meat product according to claim 1, wherein the content of the meat flavor yeast extract is 2-5 parts by weight, preferably 3.5-5 parts by weight; the extruded puffed yeast protein filaments are 10-20 parts by weight, preferably 15-20 parts by weight; the TG enzyme is 2-5 parts by weight, preferably 3.5-5 parts by weight.

3. The vegetarian meat product according to claim 1 or 2, wherein the content of the vegetable protein is 15-75 parts by weight.

4. The vegetarian meat product according to any one of claims 1-3, wherein the content of the thickener is 2-40 parts by weight.

5. The vegetarian meat product according to any one of claims 1-4, wherein the content of the auxiliary materials is 59.1-235 parts by weight.

6. The vegetarian meat product according to any one of claims 1-5, wherein the vegetable protein is one or two or more selected from the group consisting of vital wheat gluten, soybean protein isolate powder, and pea protein filaments, preferably 5-25 parts by weight of vital wheat gluten, 5-25 parts by weight of soybean protein isolate powder, and 5-25 parts by weight of pea protein filaments.

7. The vegetarian meat product according to any one of claims 1-6, wherein the vegetable oil comprises rapeseed oil and coconut oil, preferably 5-25 parts by weight of rapeseed oil and 5-25 parts by weight of coconut oil.

8. The vegetarian meat product according to any one of claims 1-7, wherein the thickener comprises methylcellulose and/or Konjac flour, preferably 1-20 parts by weight of methylcellulose and 1-20 parts by weight of Konjac flour.

9. The vegetarian meat product according to any one of claims 1-8, wherein the auxiliary materials comprise water and flavoring.

10. The vegetarian meat product according to any one of claims 1-9, wherein the flavoring comprises any one or two or more of salt, pepper, essence, monosodium glutamate, white granulated sugar, and beet juice, or a combination thereof, preferably 2-10 parts by weight of salt, 0.1-10 parts by weight of pepper, 1-10 parts by weight of essence, 2-10 parts by weight of monosodium glutamate, 2-10 parts by weight of white granulated sugar, and 2-25 parts by weight of beet juice.

11. A preparation method of the vegetarian meat product according to any one of claims 1-10, comprising:
(1) activating a TG enzyme followed by cooling;
(2) preparing a thickener and mixing with (1) for use;
(3) mixing first vegetable oil with vegetable protein and emulsifying;
(4) mixing a meat flavor yeast extract with auxiliary materials;
(5) mixing the products obtained in steps (2)-(4) for use;
(6) mixing second vegetable oil with auxiliary materials;
(7) mixing protein filaments with the products obtained in steps (5) and (6), forming, packaging, and freezing for storage.

12. The preparation method according to claim 11, wherein in step (1), the activation time of the enzyme is 15-25 minutes, preferably 20-25 minutes.

13. The preparation method according to claims 11 or 12, wherein in step (1), the cooling is ice-water cooling.

14. The preparation method according to any one of claims 11-13, wherein in step (2), ice water is added to promote dissolution during the mixing.

15. The preparation method according to any one of claims 11-14, wherein in step (3), the first vegetable oil is rapeseed oil, and the emulsification is ice-water emulsification.

16. The preparation method according to any one of claims 11-15, wherein in step (1), the ice water added during the cooling is 10-30 parts by weight; in step (2), the ice water added during the mixing is 10-30 parts by weight; in step (3), the ice water used during the emulsification is 30-100 parts by weight.

17. The preparation method according to any one of claims 11-16, wherein in step (6), the second vegetable oil is coconut oil melted by heating.

18. A filling or sauce prepared by using the vegetarian meat product according to any one of claims 1-10 or the vegetarian meat product obtained by the preparation method according to any one of claims 11-17.

19. A food product prepared by using the vegetarian meat product according to any one of claims 1-10 or the vegetarian meat product obtained by the preparation method according to any one of claims 11-17 and wheat and/or rice.
